# DEMANDE DE BREVET EUROPEEN

(11) **EP 1 026 611 A1**
(43) Date de publication de la demande: **09.08.2000**
(21) Numéro de dépôt: 00400251.5
(22) Date de dépôt: 31.01.2000
(51) Int. Cl.: G06F 17/60

(54) **Système de traitement automatisé d'opérations réalisées par un individu sur des produits et des services financiers proposés par un organisme financier**

(30) Priorité: 03.02.1999 FR 9901244
(71) Demandeur: Banque Cortal, 75116 Paris (FR)
(72) Inventeur: Thibaut, Cécile, 94130 Nogent sur Marne (FR); Trecco, René, 92190 Meudon (FR)
(74) Mandataire: Habasque, Etienne Joel Jean-François

(57) **Abrégé**

Ce système de traitement automatisé comporte une base de données générique (4), dans laquelle sont stockées des informations relatives aux produits et aux services proposés par l'organisme, associée à un système d'interface (5) à configuration programmable à choix multiples, permettant à l'individu d'activer sélectivement en outre des moyens (8) de communication avec l'organisme, des moyens (9) de gestion de ses avoirs en dépôt dans l'organisme et des moyens (10) d'aide à la décision comportant au moins un système (11) d'évaluation des performances d'au moins une valeur de placement d'entrée évolutive dans le temps, un premier système (12) d'aide à la sélection de produits financiers, un second système (13) d'aide à la sélection de produits financiers et un système (14) de calcul des répercussions liées aux frais relatifs aux produits et services proposés.

## Description

La présente invention concerne un système de traitement automatisé d'opérations réalisées par un individu sur des produits et des services financiers proposés par un organisme financier.

Les organismes financiers sans guichet c'est-à-dire accessibles par exemple à partir d'un terminal d'ordinateur et d'un réseau de communication, rencontrent de plus en plus de succès auprès du public pour diverses raisons.

Cependant, les systèmes de traitement mis en oeuvre actuellement sont relativement rudimentaires au niveau de leurs fonctionnalités tout en étant relativement complexes au niveau de leur utilisation.

Le but de l'invention est donc de résoudre ces problèmes.

A cet effet, l'invention a pour objet un système de traitement automatisé d'opérations réalisées par un individu sur des produits et des services financiers proposés par un organisme financier, comportant:
- une base de données générique dans laquelle sont stockées des informations relatives aux produits et aux services proposés par l'organisme, associée à un système d'interface à configuration programmable à choix multiples, d'accès par l'individu aux services proposés, comprenant:
- des moyens d'acquisition d'informations d'identification de l'individu,
- des moyens d'acquisition d'informations de choix réalisés par l'individu parmi les différents choix de configuration proposés,
- des moyens de stockage de ces informations de choix, et
- des moyens de configuration du système d'interface selon ces informations de choix stockées, à chaque accès de l'individu aux services proposés,
ce système d'interface permettant à l'individu d'activer sélectivement en outre des moyens de communication avec l'organisme, des moyens de gestion de ses avoirs en dépôt dans l'organisme et des moyens d'aide à la décision comportant au moins:
a) un système d'évaluation des performances d'au moins une valeur de placement financier d'entrée, évolutive dans le temps, comprenant:
   - au moins un répertoire préétabli contenant des informations d'identification d'au moins une valeur de référence sélectionnée parmi des valeurs d'un ensemble de valeurs de la base de données générique de produits et contenant la valeur d'entrée,
   - des moyens d'acquisition d'informations d'identification de la valeur d'entrée,
   - des moyens d'acquisition des informations d'évolution des valeurs d'entrée et de référence dans la base de données, et
   - des moyens de comparaison des informations d'évolution de ces valeurs d'entrée et de référence, afin de permettre l'évaluation des performances de la valeur d'entrée par rapport à la valeur de référence,
b) un premier système d'aide à la sélection de produits financiers adaptés aux souhaits d'investissements financiers de l'individu, comportant:
   - au moins un répertoire prédéfini d'établissement de liens entre certains produits sélectionnés de la base de données générique, pour former des portefeuilles prédéterminés de produits correspondant chacun à un type de comportement financier potentiel prédéterminé d'individu,
   - des moyens d'acquisition des souhaits d'investissements financiers de l'individu,
   - des moyens d'analyse de ces informations pour en déterminer un type de comportement financier estimé de l'individu,
   - des moyens de validation/modification par l'individu, du type de comportement déterminé,
   - des moyens de sélection dans le répertoire, du portefeuille de produits correspondant à ce comportement, et
   - des moyens de recherche dans la base de données des informations relatives aux produits de ce portefeuille, à l'aide des liens établis dans le répertoire, afin de délivrer à l'individu, la sélection correspondante de produits,
c) un second système d'aide à la sélection de produits financiers par l'individu comportant des moyens, programmables par l'individu, de filtrage sélectif des produits financiers de la base de données générique, par validation/inhibition de critères de sélection de ceux-ci dans cette base de données générique, afin de délivrer à l'individu une sélection personnalisée de produits financiers de cette base, et
d) un système de calcul des répercussions liées aux frais relatifs aux produits et services proposés.

L'invention sera mieux comprise à l'aide de la description qui va suivre, donnée uniquement à titre d'exemple et faite en se référant aux dessins annexés, sur lesquels:
- la Fig.1 représente un schéma synoptique illustrant un exemple de réalisation d'un système de traitement automatisé selon l'invention;
- la Fig.2 représente un schéma synoptique illustrant un exemple de réalisation d'un système d'évaluation de performances d'une valeur de placement financier, entrant dans la constitution d'un système de traitement automatisé selon l'invention;
- la Fig.3 représente un schéma synoptique illustrant un exemple de réalisation d'un premier système d'aide à la sélection de produits financiers, entrant dans la constitution d'un système de traitement automatisé selon l'invention;
- la Fig.4 représente un schéma synoptique illustrant un exemple de réalisation d'un second système d'aide à la sélection de produits financiers, entrant dans la constitution d'un système de traitement automatisé selon l'invention; et
- la Fig.5 représente un schéma synoptique illustrant un exemple de réalisation de moyens de calcul des répercussions liées aux frais relatifs aux produits et services proposés, entrant dans la constitution d'un système de traitement automatisé selon l'invention.

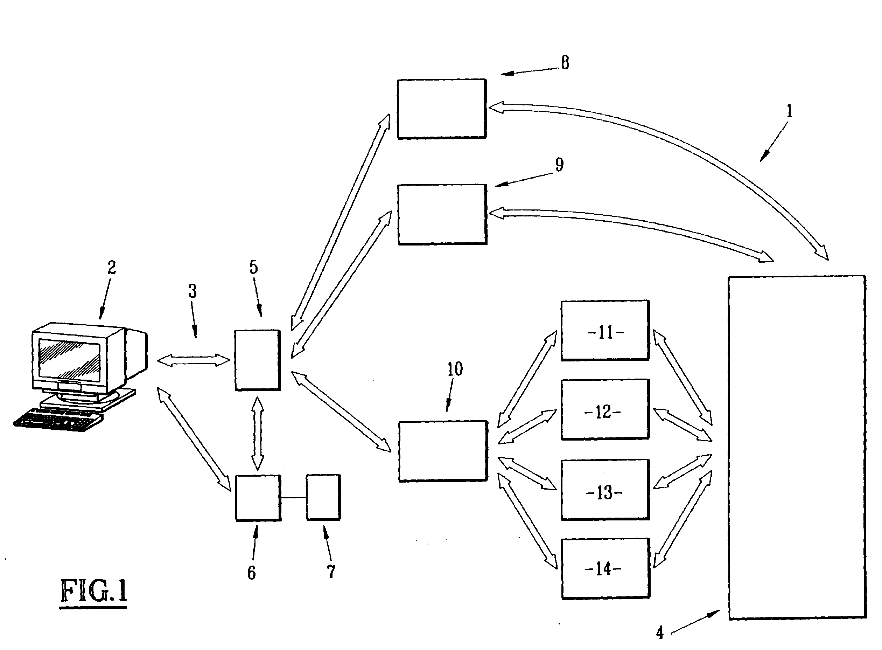

On a représenté sur la figure 1, un système de traitement automatisé d'opérations réalisées par un individu sur des produits et des services financiers proposés par un organisme financier.

Ce système de traitement est désigné par la référence générale 1 sur cette figure et est accessible à un individu par exemple à travers un terminal d'ordinateur muni de moyens d'affichage d'informations, désigné par la référence générale 2 et un réseau de communication d'informations désigné par la référence générale 3.

D'une façon générale, le système informatique comporte une base de données générique désignée par la référence générale 4 sur cette figure, dans laquelle sont stockées des informations relatives aux produits et aux services proposés par l'organisme, associée à un système d'interface à configuration programmable à choix multiples, d'accès par l'individu aux services proposés.

Ce système d'interface programmable est désigné par la référence générale 5.

Ce système d'interface 5 comporte des moyens 6 d'acquisition d'informations d'identification de l'individu et d'informations de choix réalisés par cet individu parmi les différents choix de configuration proposés.

De plus, ce système d'interface comporte des moyens de stockage de ces informations d'identification et de choix, et désignés par la référence générale 7 qui permettent de configurer le système d'interface 5 selon les informations de choix stockées, à chaque accès de l'individu aux services proposés.

Ce système d'interface permet alors à l'individu d'activer sélectivement différents moyens parmi lesquels des moyens 8 de communication avec l'organisme, des moyens 9 de gestion de ses avoirs en dépôt dans l'organisme et des moyens 10 d'aide à la décision.

Ces moyens 10 d'aide à la décision comporte en outre un système 11 d'évaluation des performances d'au moins une valeur de placement financier d'entrée évolutive dans le temps, un premier système d'aide à la sélection de produits financiers adaptés aux souhaits d'investissement financier de l'individu, désigné par la référence générale 12, un second système d'aide à la sélection de produits financiers par l'individu, désigné par la référence générale 13 et un système de calcul des répercussions liées aux frais relatifs aux opérations sur les produits et services proposés par l'organisme, désigné par la référence générale 14.

Ces différents systèmes seront décrits plus en détail par la suite.

Lors d'un premier accès de l'individu aux services proposés par l'organisme, celui-ci lui propose de personnaliser le système d'interface 5 selon les propres choix de l'individu.

Différentes possibilités de choix sont alors présentées à l'individu qui, par l'intermédiaire de son terminal, entre ses informations d'identification et les différents choix qu'il effectue parmi les choix proposés.

Une fois ces différents choix réalisés, ceux-ci sont stockés dans les moyens de stockage d'informations 7, ce qui permet lors de chaque connexion de l'individu au système de traitement, de retrouver les informations de choix stockées afin de configurer le système d'interface selon les souhaits de l'individu afin de le personnaliser.

Comme cela a été indiqué précédemment, ce système d'interface 5 permet à l'individu d'activer différents services proposés par l'organisme financier, tel que par exemple un système de communication et d'échanges d'informations avec celui-ci.

Les moyens de mise en oeuvre de ce système sont désignés par la référence générale 8 sur cette figure et permettent alors à l'individu et à l'organisme de communiquer pour échanger des informations, etc.

L'individu peut également activer par l'intermédiaire du système d'interface 5, des moyens de gestion de ses avoirs en dépôt dans l'organisme, tels que ceux désignés par la référence générale 9 sur cette figure 1.

Ceci permet alors à l'individu de gérer de façon classique, ses différents avoirs (comptes courants, comptes titres, etc).

Enfin, le système d'interface 5 permet également à l'individu d'accéder à des moyens d'aide à la décision et d'activer dans ceux-ci, différents systèmes.

En effet et comme cela a été décrit, ces moyens d'aide à la décision 10 comprennent un système 11 d'évaluation des performances d'au moins une valeur de placement financier d'entrée, évolutive dans le temps.

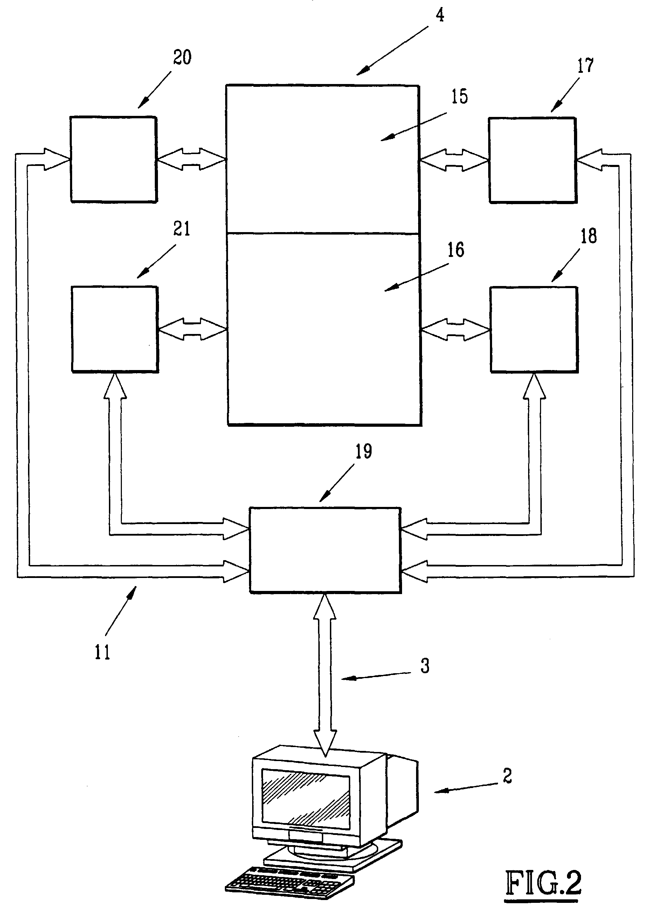

Ces moyens sont représentés plus en détail sur la figure 2, où l'on reconnaît le terminal d'ordinateur 2, le réseau de communication 3 et la base de données générique 4 de l'organisme financier.

Dans ce cas, la base de données 4 contient des informations d'identification et d'évolution dans le temps, d'au moins un ensemble de valeurs de placement financier contenant une valeur d'entrée que l'individu désire évaluer.

Dans l'exemple de réalisation représenté, la base de données 4 comporte deux ensembles de valeurs de placement financier, désignés par les références générales 15 et 16. Le système d'évaluation comporte également au moins un répertoire préétabli contenant des informations d'identification d'au moins une valeur de référence sélectionnée parmi les valeurs du ou de chaque ensemble de la base de données.

Dans l'exemple de réalisation représenté, deux répertoires 17 et 18 sont donc utilisés en association avec les ensembles de valeurs 15 et 16.

Ces répertoires sont alors utilisés pour évaluer les performances d'une valeur d'entrée, introduite dans le système par l'individu grâce au terminal d'ordinateur 2 et qui permet à ce système d'évaluation d'acquérir des informations d'identification de cette valeur d'entrée.

Le terminal 2 est alors associé à des moyens d'acquisition, désignés par la référence générale 19, des informations d'évolution de la ou de chaque valeur de référence dans la base de données 4, à travers les répertoires par exemple 17 et 18 décrits précédemment et de la valeur d'entrée à travers des tampons de transfert de données désignés par les références générales 20 et 21 sur cette figure 2, associés aux ensembles correspondants de valeurs de la base.

Enfin, ce système d'évaluation comporte des moyens de comparaison des informations d'évolution de ces valeurs d'entrée et de référence, pour permettre l'évaluation des performances de la valeur d'entrée par rapport à la valeur de référence.

Comme on l'a indiqué précédemment, la base de données 4 peut contenir différents ensembles de valeurs de placement financier correspondant par exemple à différentes catégories de valeurs et le système d'évaluation comporte alors au moins un répertoire préétabli associé à chaque ensemble et des moyens d'acquisition de la catégorie de la valeur d'entrée pour accéder au répertoire et à l'ensemble de valeurs correspondant, formé par exemple les moyens 19 décrits précédemment.

Les moyens de comparaison peuvent comporter des moyens d'affichage des informations d'évolution des valeurs d'entrée et de référence et des moyens de calcul des pertes/gains correspondants, formés par exemple par le terminal 2 et plus particulièrement, les moyens d'affichage d'informations de celui-ci.

Ceux-ci peuvent alors être utilisés pour comparer les performances des valeurs d'entrée et de référence sur différentes périodes de temps sélectionnables par exemple par l'individu.

Les informations d'identification de chaque valeur peuvent par exemple comporter un code d'identification de celle-ci, au moins une portion du nom de celle-ci et/ou le nom de l'émetteur de celle-ci.

Le ou chaque répertoire 17,18 peut être préétabli par l'organisme financier.

On conçoit alors que grâce à un tel système, on stocke des ensembles de valeurs de placement financier et l'organisme financier détermine un répertoire dans lequel sont stockées des informations d'identification d'au moins une valeur de référence sélectionnée parmi les valeurs de l'ensemble de la base de données, cette valeur de référence servant de valeur étalon pour évaluer les performances d'une valeur de placement financier entrée par un individu.

Une telle structure permet d'acquérir les informations d'évolution des valeurs d'entrée et de référence et de les comparer afin de permettre une évaluation la plus objective possible d'une valeur d'entrée par rapport à une référence.

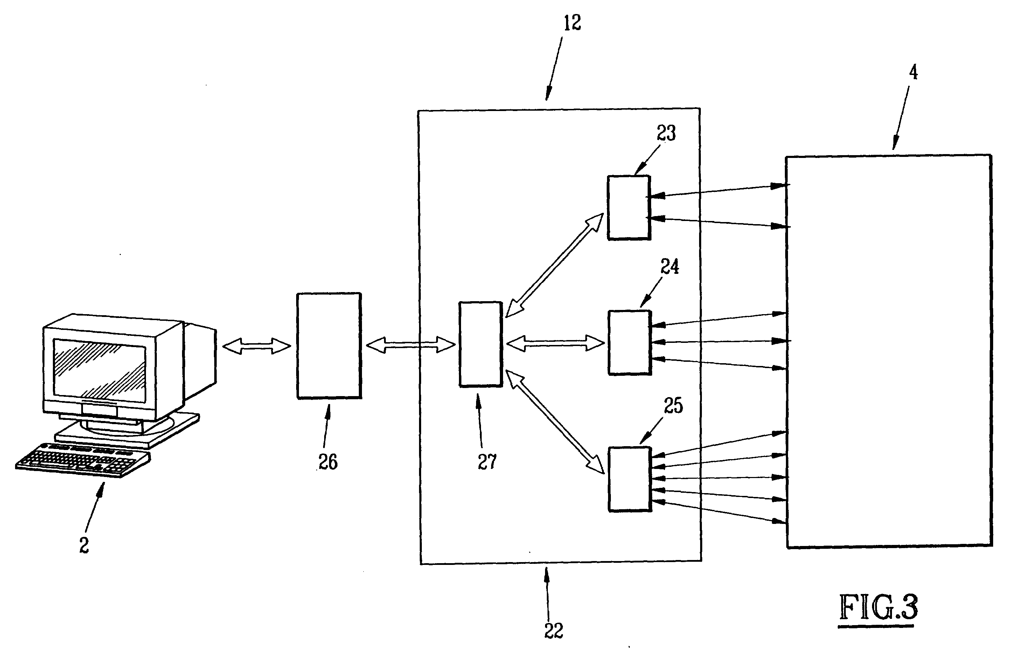

Comme cela a été indiqué précédemment, les moyens d'aide à la décision 10 comportent également un premier système d'aide à la sélection de produits financiers adaptés aux souhaits d'investissement financier de l'individu, ce système étant désigné par la référence générale 12 sur la figure 1 et étant décrit en détail sur la figure 3.

On reconnaît toujours sur cette figure 3, la base de données 4 et le terminal d'ordinateur 2.

La base de données 4 est associée à un répertoire prédéfini d'établissement de liens entre certains produits sélectionnés de cette base pour former des portefeuilles prédéterminés de produits correspondant chacun à un type de comportement financier potentiel prédéterminé d'individu.

Le répertoire prédéfini est désigné par la référence générale 22 sur cette figure 3 et dans l'exemple décrit, comporte par exemple trois portefeuilles désignés par les références générales 23,24 et 25 respectivement, qui correspondent chacun à un type de comportement financier potentiel prédéterminé d'individu et qui permettent d'établir des liens entre différents produits sélectionnés de la base 4 comme cela est illustré.

De plus, ce système comporte des moyens 26 d'analyse des souhaits d'investissement financier de l'individu, tels qu'acquis à travers le terminal 2, pour en déterminer un type de comportement financier estimé de l'individu.

Ce type de comportement financier estimé de l'individu est alors présenté à celui-ci pour validation ou modification au niveau du terminal 2, avant d'activer des moyens 27 de sélection dans le répertoire 22, du portefeuille de produits correspondant à ce comportement.

Ensuite les différentes informations relatives aux produits financiers de ce portefeuille sont recherchées par ces moyens 27 dans la base de données 4, à l'aide des liens établis dans le répertoire 22 afin de délivrer à l'individu, la sélection correspondante des produits de ce portefeuille.

Le répertoire et les liens correspondant aux différents portefeuilles sont prédéfinis par exemple par l'organisme financier et il va de soi que la base de données peut comporter des produits financiers de natures différentes pour adapter au mieux ces portefeuilles aux souhaits d'investissement potentiels.

L'analyse des informations relatives aux souhaits d'investissement financier de l'individu peut être une analyse pondérale pour affiner la détermination du type de comportement.

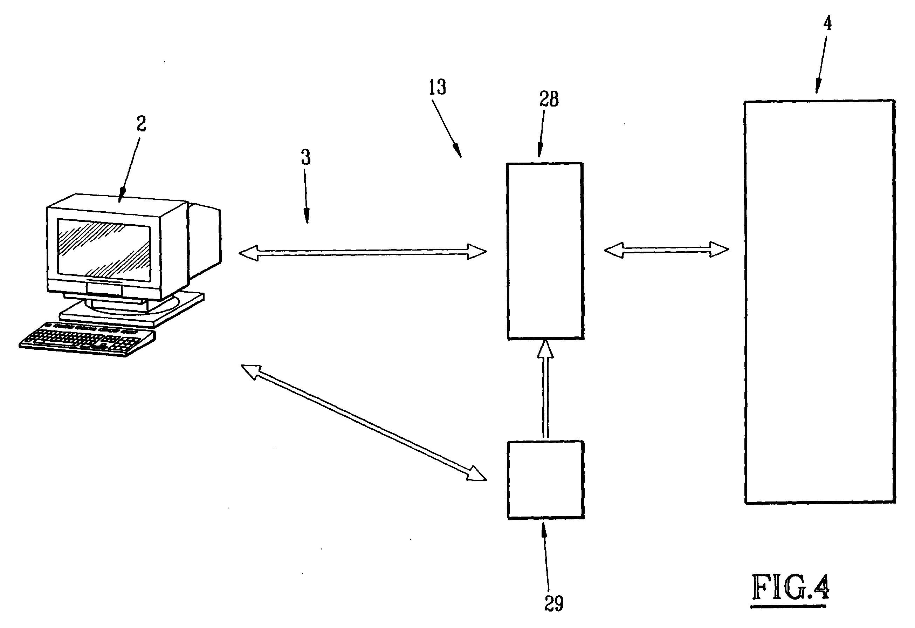

Les moyens d'aide à la décision 10 comportent également un second système d'aide à la sélection de produits financiers par l'individu, désigné par la référence générale 13 sur la figure 1 et représenté en détail sur la figure 4.

On reconnaît en effet sur cette figure, la base de données générique 4 et le terminal d'ordinateur 2.

Pour permettre de réaliser une sélection parmi les produits financiers de la base de données 4, des moyens de filtrage sont interposés entre le terminal 2 et la base de données 4.

Ces moyens de filtrage sont désignés par la référence générale 28 et sont programmables par l'individu, pour réaliser un filtrage sélectif des produits financiers par validation/inhibition de critères de sélection de ceux-ci dans la base de données génériques afin de délivrer à l'individu, une sélection personnalisée de produits financiers de cette base.

Chaque produit financier est alors associé à des critères de sélection, qui peuvent par exemple concerner la catégorie de produits, les performances de ceux-ci, etc.

Ces critères peuvent être cumulables ou non.

On conçoit alors que l'individu qui souhaite sélectionner certains produits financiers de la base de données 4 entre, grâce au terminal d'ordinateur 2, des informations de programmation des moyens de filtrage, pour réaliser un filtrage sélectif de ces produits.

Ces moyens de filtrage comportent alors par exemple des moyens de stockage 29 de l'état de programmation des moyens de filtrage sélectifs associés aux moyens d'identification de l'individu, pour permettre l'activation automatique des moyens de filtrage 28 lors de chaque accès de l'individu à la base de données générique.

Ces moyens de filtrage programmables permettent alors de ne sélectionner dans la base de données que certains des produits financiers, dont les critères de sélection correspondent à ceux fixés par l'individu.

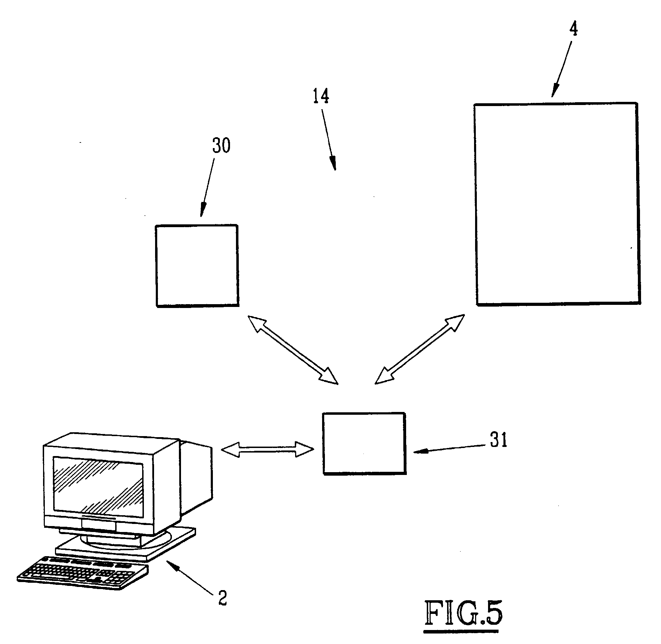

Enfin, les moyens d'aide à la décision 10 comportent également un système de calcul des répercussions liées aux frais relatifs aux opérations réalisées par l'individu, désigné par la référence générale 14 sur la figure 1 et représentés en détail sur la figure 5.

On reconnaît toujours sur cette figure 5, le terminal d'ordinateur 2 et la base de données générique 4.

Cette base de données est alors associée à un répertoire désigné par la référence générale 30, dans lequel sont stockées des informations relatives aux frais de traitement des opérations effectuées comme par exemple d'achat/vente de produits financiers.

De plus, le système comporte des moyens 31 de calcul de la valeur nette de ces produits par addition/déduction des frais, ces moyens étant par exemple accessibles à un individu par l'intermédiaire du terminal d'ordinateur 2 et du réseau de communication 3.

Lorsque l'individu souhaite réaliser une opération sur un produit financier, il accède alors aux moyens de calcul 31 par l'intermédiaire du terminal 2, ces moyens 31 recherchant dans la base de données 4 et le répertoire 30, les informations permettant de calculer par exemple la valeur nette d'un produit pour la présenter à l'individu.

On conçoit alors que ce système permet de faciliter la gestion des produits financiers dans la mesure où les informations délivrées à l'individu sont des informations de valeur nette des produits, c'est-à-dire une fois les frais relatifs aux opérations envisagées pris en compte.

La mise à jour de ce système de calcul est également aisée dans la mesure où le répertoire 30 peut être modifié pour tenir compte d'un changement du montant des frais.

Il va de soi bien entendu que d'autres modes de réalisation de ce système de traitement automatique peuvent être envisagés et que d'autres services encore peuvent être proposés.

Un tel système de traitement automatisé présente alors un certain nombre d'avantages, notamment au niveau de sa simplicité d'utilisation et d'accès aux produits et aux services proposés par l'organisme financier tout en étant d'une utilisation extrêmement simple.

Différents moyens permettent à chaque individu de personnaliser l'accès au système, ce qui permet en quelque sorte à chaque individu de construire son propre organisme financier selon ses critères de prédilection.

## Revendications

1. Système de traitement automatisé d'opérations réalisées par un individu sur des produits et des services financiers proposés par un organisme financier, comportant:
- une base de données générique (4) dans laquelle sont stockées des informations relatives aux produits et aux services proposés par l'organisme, associée à un système d'interface (5) à configuration programmable à choix multiples, d'accès par l'individu aux services proposés, comprenant:
- des moyens (6) d'acquisition d'informations d'identification de l'individu,
- des moyens (6) d'acquisition d'informations de choix réalisés par l'individu parmi les différents choix de configuration proposés,
- des moyens (7) de stockage de ces informations de choix, et
- des moyens (7) de configuration du système d'interface (5) selon ces informations de choix stockées, à chaque accès de l'individu aux services proposés,
ce système d'interface (5) permettant à l'individu d'activer sélectivement en outre des moyens (8) de communication avec l'organisme, des moyens (9) de gestion de ses avoirs en dépôt dans l'organisme et des moyens (10) d'aide à la décision comportant au moins:
a) un système (11) d'évaluation des performances d'au moins une valeur de placement financier d'entrée, évolutive dans le temps, comprenant:
- au moins un répertoire préétabli (17,18) contenant des informations d'identification d'au moins une valeur de référence sélectionnée parmi des valeurs d'un ensemble (15,16) de valeurs de la base de données générique (4) de produits et contenant la valeur d'entrée,
- des moyens (2) d'acquisition d'informations d'identification de la valeur d'entrée,
- des moyens (19) d'acquisition des informations d'évolution des valeurs d'entrée et de référence dans la base de données (4), et
- des moyens (2) de comparaison des informations d'évolution de ces valeurs d'entrée et de référence, afin de permettre l'évaluation des performances de la valeur d'entrée par rapport à la valeur de référence,
b) un premier système (12) d'aide à la sélection de produits financiers adaptés aux souhaits d'investissements financiers de l'individu, comportant:
- au moins un répertoire prédéfini (22) d'établissement de liens entre certains produits sélectionnés de la base de données générique (4), pour former des portefeuilles prédéterminés de produits (23,24,25) correspondant chacun à un type de comportement financier potentiel prédéterminé d'individu,
- des moyens (2) d'acquisition des souhaits d'investissements financiers de l'individu,
- des moyens (26) d'analyse de ces informations pour en déterminer un type de comportement financier estimé de l'individu,
- des moyens (2) de validation/modification par l'individu, du type de comportement déterminé,
- des moyens (27) de sélection dans le répertoire (22), du portefeuille de produits (23,24,25) correspondant à ce comportement, et
- des moyens (27) de recherche dans la base de données (4) des informations relatives aux produits de ce portefeuille, à l'aide des liens établis dans le répertoire (22), afin de délivrer à l'individu, la sélection correspondante de produits,
c) un second système (13) d'aide à la sélection de produits financiers par l'individu comportant des moyens (28), programmables par l'individu, de filtrage sélectif des produits financiers de la base de données générique (4), par validation/inhibition de critères de sélection de ceux-ci dans cette base de données générique, afin de délivrer à l'individu une sélection personnalisée de produits financiers de cette base, et
d) un système (14) de calcul des répercussions liées aux frais relatifs aux produits et services proposés.

2. Système selon la revendication 1, caractérisé en ce que la base de données (4) contient différents ensembles (15,16) de valeurs de placement financier correspondant à différentes catégories de valeurs et en ce que le système d'évaluation (11) comporte au moins un répertoire préétabli (17,18) associé à chaque ensemble et des moyens (19) d'acquisition de la catégorie de la valeur d'entrée pour accéder au répertoire et à l'ensemble de valeurs correspondant.

3. Système selon la revendication 1 ou 2, caractérisé en ce que les moyens de comparaison (2) comprennent des moyens d'affichage des informations d'évolution des valeurs d'entrée et de référence.

4. Système selon l'une quelconque des revendications précédentes, caractérisé en ce que les moyens de comparaison (2) comprennent des moyens de calcul des gains/pertes correspondants.

5. Système selon l'une quelconque des revendications précédentes, caractérisé en ce que les moyens de comparaison (2) comprennent des moyens de comparaison de l'évolution des valeurs d'entrée et de référence sur différentes périodes de temps sélectionnables.

6. Système selon l'une quelconque des revendications précédentes, caractérisé en ce que les informations d'identification de chaque valeur comportent un code d'identification de celle-ci.

7. Système selon l'une quelconque des revendications précédentes, caractérisé en ce que les informations d'identification de chaque valeur comportent au moins une portion du nom de celle-ci.

8. Système selon l'une quelconque des revendications précédentes, caractérisé en ce que les informations d'identification de chaque valeur comportent le nom de l'émetteur de celle-ci.

9. Système selon l'une quelconque des revendications précédentes, caractérisé en ce que le second système (13) d'aide à la sélection de produits financiers comporte des moyens (29) de stockage de l'état de programmation des moyens de filtrage sélectifs (28) associés à des moyens (6) d'identification de l'individu pour permettre l'activation automatique des moyens de filtrage (28) lors de chaque accès de l'individu à la base de données.

10. Système selon l'une quelconque des revendications précédentes, caractérisé en ce que le système (14) de calcul des répercussions liées aux frais comportent un répertoire (30) dans lequel sont stockées des informations relatives aux frais de traitement des opérations et des moyens (31) de calcul des répercussions de ces frais sur la valeur des produits liés à ces opérations.
